# EUROPEAN PATENT APPLICATION

(11) **EP 4 276 940 A1**
(43) Date of publication of application: **15.11.2023**
(21) Application number: 22804977.1
(22) Date of filing: 18.05.2022
(51) Int. Cl.: H01M 4/136, H01M 4/131, H01M 4/62, H01M 10/42, H01M 10/052, H01M 4/02

(54) **POSITIVE ELECTRODE FOR RECHARGEABLE LITHIUM BATTERY AND RECHARGEABLE LITHIUM BATTERY COMPRISING SAME**

(30) Priority: 20.05.2021 KR 20210064941
(71) Applicant: Samsung SDI Co., Ltd., Yongin-si, Gyeonggi-do 17084 (KR)
(72) Inventor: HA, Jaehwan, Yongin-si, Gyeonggi-do 17084 (KR); KIM, Kijun, Yongin-si, Gyeonggi-do 17084 (KR); KIM, Duckhyun, Yongin-si, Gyeonggi-do 17084 (KR); YOO, Heeeun, Yongin-si, Gyeonggi-do 17084 (KR); JANG, Woonsuk, Yongin-si, Gyeonggi-do 17084 (KR)
(74) Representative: Marks & Clerk LLP
(86) International application number: PCT/KR2022/007098
(87) International publication number: WO 2022/245123

(57) **Abstract**

The present invention relates to a positive electrode for a rechargeable lithium battery, and a rechargeable lithium battery including the same. The positive electrode for the rechargeable lithium battery includes a current collector; a first active material layer disposed on the current collector and including a first active material and a melamine-based compound; and a second active material layer disposed on the first active material layer and including a second active material, wherein the first active material and the second active material are different from each other, and the first active material includes at least one of the compounds represented by Chemical Formulas 1 to 4.
(The definitions of Chemical Formulas 1 to 4 are the same as described in the specification.)

## Description

### [Technical Field]

A positive electrode for a rechargeable lithium battery and a rechargeable lithium battery comprising the same are disclosed.

### [Background Art]

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles. In particular, while the demand for high-voltage batteries is increasing, it is necessary to develop batteries that realize high voltage, minimize energy density degradation, and ensure thermal safety, physical safety, and reliability.

### [Disclosure]

### [Technical Problem]

Provided are a positive electrode for a rechargeable lithium battery that realizes a high voltage, minimizes energy density reduction, and secures safety and reliability, and a rechargeable lithium battery including the same.

### [Technical Solution]

In an embodiment, a positive electrode for a rechargeable lithium battery includes a current collector; a first active material layer disposed on the current collector and including a first active material and a melamine-based compound; and a second active material layer disposed on the first active material layer and including a second active material, wherein the first active material and the second active material are different from each other and the first active material includes at least one of the compounds represented by Chemical Formulas 1 to 4. Chemical Formulas 1 to 4 will be described later.

In another embodiment, a rechargeable lithium battery including the positive electrode, a negative electrode, and an electrolyte.

### [Advantageous Effects]

A positive electrode for a rechargeable lithium battery according to an embodiment and a rechargeable lithium battery including the same realize high voltage, minimize energy density reduction, and have excellent safety and reliability.

### [Description of the Drawings]

FIG. 1 is a schematic view illustrating a rechargeable lithium battery according to an embodiment.
FIG. 2 is a graph showing DC-IR resistance performance evaluation for rechargeable battery cells according to examples and comparative examples.
FIG. 3 is a graph showing cycle-life evaluation of rechargeable battery cells according to examples and comparative examples.

### [Mode for Invention]

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

Herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution.

### Positive Electrode

In an embodiment, a positive electrode for a rechargeable lithium battery includes a current collector; a first active material layer disposed on the current collector and including a first active material and a melamine-based compound; and a second active material layer disposed on the first active material layer and including a second active material. wherein the first active material and the second active material are different from each other and the first active material includes at least one of the compounds represented by Chemical Formulas 1 to 5.

[Chemical Formula 1] Liₐ₁M¹ₓ₁Fe₍₁₋ₓ₁₎PO₄

In Chemical Formula 1, 0.90≤a1≤1.5, 0≤x1≤0.7, and M¹ is Mg, Co, Ni, or a combination thereof.

[Chemical Formula 2] Liₐ₂Mnₓ₂Fe₍₁₋ₓ₂₎PO₄

In Chemical Formula 2, 0.90≤a2≤1.5, and 0.1≤x2≤0.9.

[Chemical Formula 3] Liₐ₃Mn₍₂₋ₓ₃₎M³ₓ₃O₄

In Chemical Formula 3, 0.90≤a3≤1.5, 0≤x3≤0.4, and M³ is Al, Cr, Mg, La, Ce, Sr, V, or a combination thereof.

[Chemical Formula 4] Liₐ₄Mn₍₁₋ₓ₄₎M⁴ₓ₄PO₄

In Chemical Formula 4, 0.90 ≤ a4 ≤ 1.5, 0 ≤ x4 ≤ 0.5, and M⁴ is Al, Cr, Mg, La, Ce, Sr, V, or a combination thereof.

The positive electrode for the rechargeable lithium battery according to an embodiment may have a structure in which a first active material layer including a first active material and a melamine-based compound is coated on a surface of a current collector, and may be be said to be a structure in which the first active material layer including the first active material and the melamine-based compound is present between the current collector and the second active material layer.

In the first active material layer, when the battery is subjected to thermal exposure, penetration, crash, impact, and the like, the melamine-based compound blocks a network between the first active materials and restricts movements of lithium ions and electrons and thus makes a current flow difficult, effectively suppressing overheating and explosion of the battery. Accordingly, the first active material layer may also be referred to as a type of safety functional layer. The first active material layer acts as the safety functional layer and thus may secure safety and reliability of the battery, even though a high-voltage/high-density active material is applied to the second active material layer. In addition, the first active material layer may promote the movements of electrons and lithium ions in the electrodes in normal times when there are no issues such as overheating or an impact and the like. As a result, the positive electrode for the rechargeable lithium battery according to an embodiment may not only realize high voltage but also minimize a decrease in energy density and thus secure safety and reliability of the battery.

In the positive electrode for the rechargeable lithium battery according to an embodiment, a thickness of the first active material layer may be thinner that of the second active material layer, and an average particle diameter of the first active material may be smaller than that of the second active material.

Herein, the first active material may be referred to as a low exothermic active material and mean active materials with high energy density and low electronic conductivity. The first active material layer including the first active material exhibits excellent capability of blocking the current flow when the issues occur and simultaneously, may improve basic characteristics such as charge and discharge characteristics and cycle-life characteristics of the battery in normal times as well as realize a high-voltage battery.

The compound represented by Chemical Formula 1 may also be referred to as a lithium iron phosphate compound. A mole ratio of lithium in Chemical Formula 1 may be appropriately adjusted between approximately 0.9 and 1.5, and may be, for example, 0.90≤a1≤1.2 or 0.95≤a1≤1.1. In Chemical Formula 1, Mg, Co, Ni, and the like may be present in addition to Fe, and each content thereof may be 0≤x1≤0.7, and for example, 0≤x1≤0.5, 0≤x1≤0.3, 0≤x1≤0.1, or 0≤x1≤0.05, and when a1=1 and x1 =0, Chemical Formula 1 may be represented by LiFePO₄.

The compound represented by Chemical Formula 2 may also be referred to as lithium manganese iron phosphate. A mole ratio of lithium in Chemical Formula 2 may be, for example, 0.90≤a2≤1.2 or 0.95≤a2≤1.1. In Chemical Formula 2, a content of manganese may be, for example, 0.2≤x2≤0.9, 0.3≤x2≤0.9, or 0.4≤x2≤0.8 and in particular, when 0.5≤x2≤0.9, basic properties as an active material such as capacity characteristics are improved, and it has an excellent ability to block current when a battery issue occurs.

The compound represented by Chemical Formula 3 may also be referred to as lithium manganese oxide. A mole ratio of lithium in Chemical Formula 3 may be, for example, 0.90≤a3≤1.2 or 0.95≤a3≤1.1. In Chemical Formula 3, in addition to Mn, elements such as Al, Cr, Mg, La, Ce, Sr, and V may be present, and each content thereof may be 0≤x3≤0.4, and for example, 0≤x3≤0.3, 0≤x3≤0.2, 0≤x3≤0.1, or 0≤x3≤0.01. In Chemical Formula 3, when a3 = 1 and x3 = 0, Chemical Formula 3 may be represented by LiMn₂O₄.

The compound represented by Chemical Formula 4 may also be referred to as lithium manganese phosphate. Likewise, a mole ratio of lithium in Chemical Formula 4 may be, for example, 0.90≤a4≤1.2 or 0.95≤a4≤1.1. In Chemical Formula 4, in addition to Mn, elements such as Al, Cr, Mg, La, Ce, Sr, and V may be present, and each content thereof may be 0≤x4≤0.4, and for example, 0≤x4≤0.3, 0≤x4≤0.2, 0≤x4≤0.1, or0≤x4≤0.01. In Chemical Formula 4, when a4=1 and x4=0, Chemical Formula 4 may be represented by LiMnPO₄.

An average particle diameter of the first active material may be 10 nm to 2 µm, for example, 10 nm to 1.8 µm, 10 nm to 1.6 µm, 50 nm to 1.4 µm, 50 nm to 1.2 µm, or 100 nm to 1 µm. When the average particle diameter of the first active material satisfies the above range, the first active material exhibits characteristics such as high capacity and high energy density, and at the same time may effectively block current when issues such as overheating or shock occur in the battery. Herein, the average particle diameter of the first active material may be measured through particle size distribution analysis, and may mean the diameter (D50) of particles having a cumulative volume of 50% by volume. The average particle diameter of the first active material may be smaller than that of the second active material, which will be described later.

The first active material may be included in an amount of 70 wt% to 99.8 wt%, for example, 70 wt% to 99.5 wt%, 70 wt% to 99.5 wt%, or 70 wt% to 98 wt%, or 75 wt% to 95 wt%, or for example, 75 wt% to 99.8 wt% or 80 wt% to 99.8 wt% based on 100 wt% of the first active material layer. When the first active material is included in the above range, the first active material layer may effectively play a role of reducing heat generation by inducing low heat generation when an issue such as overheating or shock occurs while maintaining excellent battery characteristics in normal times.

The melamine-based compound may be a compound containing melamine, and may mean, for example, melamine, a melamine derivative, or a combination thereof. Herein, the melamine derivative may be a salt containing melamine, and may include, for example, a melamine organic acid salt, a melamine inorganic acid salt, or a combination thereof.

The melamine organic acid salt may be, for example, melamine cyanurate, melamine pyrrolate, or the like. The melamine inorganic acid salt may be melamine phosphate, melamine pyrophosphate, melamine metaphosphate, melamine polyphosphate, melamine borate, or melamine polyborate.

The melamine-based compound may be included in an amount of 0.2 wt% to 15 wt%, for example 0.2 wt% to 15 wt%, 0.5 wt% to 15 wt%, 0.5 wt% to 414 wt%, or 0.5 wt% to 313 wt%, or for example 0.2 wt% to 10 wt%, 0.2 wt% to 8 wt%, 0.2 wt% to 6 wt% or 0.5 wt% to 4 wt% based on 100% by weight of the first active material layer. When the melamine-based compound is included in the above range, it is possible to prevent battery explosion early by effectively suppressing the movement of lithium ions and electrons when issues such as overheating or shock occur in the battery without interfering with normal battery performance at all.

The first active material layer may further include a conductive material. The conductive material may help electrons to move smoothly in normal times. The conductive material may be a carbon material, for example, natural graphite, artificial graphite, carbon black, acetylene black, denka black, ketjen black, a carbon nanotube, an L-carbon nanotube (long length carbon nanotube), a carbon fiber, or a combination thereof.

The conductive material may be included in an amount of 0.1 wt% to 5 wt%, for example, 0.1 wt% to 4 wt%, or 1 wt% to 3 wt%, based on 100 wt% of the first active material layer. When the conductive material is included in the above range, the first active material layer may maintain excellent battery characteristics in normal times, and may effectively block current to suppress battery explosion when an issue occurs.

The first active material layer may further include a binder. The binder may play a role of helping components in the first active material layer to be well bound, binding the current collector to the first active material layer, and binding the first active material layer to the second active material layer. The binder may be used without limitation as long as it is a general binder used in a battery. For example, the binder may include polyvinylchloride, carboxylated polyvinylchloride, polyvinylfluoride, polyvinylidene fluoride, polyethylene oxide, polyvinylpyrrolidone, polyurethane, polytetrafluoroethylene, a styrene butadiene rubber, an acrylated styrene butadiene rubber, an acrylonitrile butadiene rubber, carboxymethylcellulose, hydroxypropylcellulose, diacetylcellulose, polyimide, polyamideimide, or a combination thereof.

The binder may be included in an amount of 0.1 wt% to 10 wt%, for example, 0.1 wt% to 9 wt%, or 1 wt% to 8 wt%, based on 100 wt% of the first active material layer. When the binder is included in the above range, the first active material layer may maintain excellent battery characteristics in normal times, and may effectively block current when an issue occurs to suppress battery explosion or the like.

When the first active material layer includes a conductive material and a binder, based on 100 wt% of the first active material layer, the first active material may be included in an amount of 73 wt% to 99 wt%, the melamine-based compound may be included in an amount of 0.2 wt% to 10 wt%, the conductive material may be included in an amount of 0.1 to 7 wt%, and the binder may be included in an amount of 0.1 to 10 wt%. When each component is included in the above range, the first active material layer may effectively block flows of lithium and electrons when issues such as overheating or shock occur while maintaining excellent battery characteristics in normal times, thereby suppressing battery explosion at an early stage.

A thickness of the first active material layer may be 2 µm to 10 µm, for example, 3 µm to 9 µm, 3 µm to 8 µm, or 3 µm to 7 µm. When the thickness of the first active material layer satisfies the above range, the first active material layer may sufficiently perform a role of blocking current when an issue occurs while maintaining excellent performance of the battery in normal times. The thickness of the first active material layer may be thinner than a thickness of a second active material layer to be described later.

The second active material layer may be understood as a general positive electrode active material layer used in a positive electrode of a rechargeable lithium battery. In an embodiment, the second active material layer may include an active material that implements high voltage and high capacity, and accordingly, a positive electrode for a rechargeable lithium battery may implement high voltage and high capacity through the second active material layer and at the same time may ensure safety and reliability of the battery through the first active material layer.

The second active material included in the second active material layer may be a compound capable of intercalating and deintercalating lithium (lithiated intercalation compound), for example, a compound represented by any one of the following chemical formulas:

LiₐA_{1-b}X_{b}D₂ (0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}CO_{b}X_{c}D_{α} (0.90 ≤ a ≤1.8, 0 ≤ b ≤ 0.5, 0 ≤ c ≤ 0.5, 0 < α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}CO_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{1-b-c}Mn_{b}X_{c}D_{α}(0.90 ≤ a ≤ 1.8, 0 ≤ b ≤ 0.5, 0 ≤ c ≤ 0.05, 0 < α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Mn_{b}X_{c}O_{2-α}T₂(0.90 ≤ a ≤ 1.8, 0 ≤ b ≤ 0.5, 0 ≤ c ≤ 0.05, 0 < α < 2);

LiₐNi_{b}E_{c}G_{d}O₂(0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);

LiₐNiG_{b}O₂(0.90 ≤ a ≤ 1.8, 0.001 ≤ b ≤ 0.1);

LiₐCoG_{b}O₂(0.90 ≤ a ≤ 1.8, 0.001 ≤ b ≤ 0.1);

LiₐMn_{1-b}G_{b}O₂(0.90 ≤ a ≤ 1.8, 0.001 ≤ b ≤ 0.1); and

LiₐMn₂G_{b}O₄(0.90 ≤ a ≤ 1.8, 0.001 ≤ b ≤ 0.1);

wherein, in the above chemical formulas, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The second active material may include, for example, a composite oxide of at least one metal selected from cobalt, manganese, nickel, aluminum, and a combination thereof and lithium. The second active material may include, for example, a compound represented by Chemical Formula 11.

[Chemical Formula 11] Liₐ₁₁M¹¹_{1-y11-z11}M¹²_{y11}M¹³_{z11}O₂

In Chemical Formula 11, 0.9≤a11≤1.8, 0≤y11<1, 0≤z11<1, 0≤y11+z11<1, M¹¹, M¹², and M¹³ are each independently Ni, Co, Mn, Al, Mg, Ti, or a combination thereof. A mole ratio of lithium in Chemical Formula 11 may be appropriately adjusted, and may be, for example, 0.90≤a11≤1.5 or 0.95≤a11≤1.2.

The second active material may include, for example, a compound represented by Chemical Formula 12.

[Chemical Formula 12] Liₐ₁₂A¹²_{1-b12}X¹²_{b12}O₂

In Chemical Formula 12, 0.90≤a12≤1.8, 0≤b12≤0.4, A¹² is Li, Co, or Mn, and X¹² is Al, Cr, Fe, Mg, Sr, V, or a combination thereof. A mole ratio of lithium in Chemical Formula 12 may be appropriately adjusted, and may be, for example, 0.90≤a12≤1.5 or 0.95≤a12≤1.2. A content of X¹² may be, for example, 0≤b≤0.3, 0≤b≤0.2, 0≤b≤0.1 or 0≤b≤0.01. Chemical Formula 12 may be, for example, LiNiO₂, LiCoO₂, LiMnO₂, or the like.

The second active material may include, for example, a compound represented by Chemical Formula 13.

[Chemical Formula 13] Liₐ₁₃Ni_{b13}E¹³_{c13}G¹³_{d13}O₂

In Chemical Formula 13, 0.90≤a13≤1.8, 0<b13≤0.99, 0<c13≤0.8, 0≤d13≤0.1, b13+c13+d13=1, E¹³ is Co, Mn, or a combination thereof, and G¹³ is Al, Cr, Fe, Mg, La, Ce, Sr, V, or a combination thereof.

The second active material may include, for example, a compound represented by Chemical Formula 14.

[Chemical Formula 14] Liₐ₁₄Ni_{y14}Co_{z14}Al_{1-y14-z14}O₂

In Chemical Formula 14, 0.9≤x14≤1.8, 0.5≤y14≤1, and 0≤z14≤0.5. For example, in Chemical Formula 14, 0.8≤y14≤1 and 0≤z14≤0.2 may be satisfied, and in this case, high capacity may be implemented.

The second active material may include, for example, a compound represented by Chemical Formula 15.

[Chemical Formula 15] Liₐ₁₅Ni_{y15}CO_{z15}Mn_{1-y15-z15}O₂

In Chemical Formula 15, 0.9≤x15≤1.8, 0.5≤y15≤1, and 0≤z15≤0.5. For example, in Chemical Formula 15, 0.8≤y15≤1 and 0≤z15≤0.2 may be satisfied, and in this case, high capacity may be implemented.

The second active material may include, for example, a compound represented by Chemical Formula 16.

[Chemical Formula 16] Liₐ₁₆Mn₍₂₋ₓ₁₆₎M¹⁶ₓ₁₆O₄

In Chemical Formula 16, 0.90≤a16≤1.8, 0≤x16≤0.4, and M¹⁶ is Al, Cr, Fe, Mg, La, Ce, Sr, V, or a combination thereof. In Chemical Formula 15, 0≤x16≤0.3, 0≤x16≤0.2, 0≤x16≤0.1, or 0≤x16≤0.01.

The second active material exemplified in this way may be a positive electrode active material realizing high voltage and high capacity.

The second active material may also include the aforementioned compound and an active material having a coating layer formed on the surface thereof. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a combination thereof. The coating layer forming process may use a method that does not adversely affect the physical properties of the positive electrode active material, such as spray coating or dipping.

An average particle diameter of the second active material may be 1 µm to 30 µm. When the average particle diameter of the second active material satisfies the above range, the second active material layer including the same may realize high voltage and high capacity and exhibit excellent energy density.

For example, the second active material may include a small-particle diameter active material having a particle diameter of 1 µm to 8 µm and a large-particle diameter active material having a particle diameter of 10 µm to 30 µm. In this case, the second active material may realize excellent energy density and exhibit high voltage and high capacity.

A content of the second active material may be 90 wt% to 98 wt% based on the total weight of the second active material layer.

The second active material layer may further include a binder and/or a conductive material. Contents of the binder and the conductive material may be 0.1 wt% to 5 wt%, respectively, based on the total weight of the second active material layer.

The binder improves binding properties of positive electrode active material particles with one another and with a current collector and examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanotube, and the like; a metal-based material of a metal powder or a metal fiber including copper, nickel, aluminum, silver, and the like; a conductive polymer such as a polyphenylene derivative; or a mixture thereof.

A thickness of the second active material layer may be 11 µm to 100 µm, for example, 15 µm to 90 µm, 20 µm to 80 µm, or 30 µm to 70 µm. In this case, the second active material layer may implement excellent battery characteristics while exhibiting high voltage and high capacity.

The positive electrode for the rechargeable lithium battery according to an embodiment may further include a third active material layer and a fourth active material layer. In this way, when a multi-layered positive electrode is applied, a high-capacity battery may be realized.
An aluminum foil may be used as the current collector, but is not limited thereto.

### Negative Electrode

A negative electrode for a rechargeable lithium battery includes a current collector and a negative electrode active material layer formed on the current collector and including a negative electrode active material.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be non-shaped, or sheet, flake, spherical, or fiber shaped natural graphite or artificial graphite and the amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material, wherein the Si-based negative electrode active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may include Sn, SnO₂, Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn), and at least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be 10 wt% to 50 wt% based on the total weight of the silicon-carbon composite. In addition, the content of the crystalline carbon may be 10 wt% to 70 wt% based on the total weight of the silicon-carbon composite, and the content of the amorphous carbon may be 20 wt% to 40 wt% based on the total weight of the silicon-carbon composite. In addition, a thickness of the amorphous carbon coating layer may be 5 nm to 100 nm. An average particle diameter (D50) of the silicon particles may be 10 nm to 20 µm. The average particle diameter (D50) of the silicon particles may be preferably 10 nm to 200 nm. The silicon particles may exist in an oxidized form, and in this case, an atomic content ratio of Si:O in the silicon particles indicating a degree of oxidation may be a weight ratio of 99:1 to 33:67. The silicon particles may be SiOₓ particles, and in this case, the range of x in SiOₓ may be greater than 0 and less than 2. In the present specification, unless otherwise defined, an average particle diameter (D50) indicates a particle where a cumulative volume is 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of 1:99 to 90:10.

In the negative electrode active material layer, the negative electrode active material may be included in an amount of 95 wt% to 99 wt% based on the total weight of the negative electrode active material layer.

In an embodiment, the negative electrode active material layer further includes a binder, and may optionally further include a conductive material. The content of the binder in the negative electrode active material layer may be 1 wt% to 5 wt% based on the total weight of the negative electrode active material layer. In addition, when the conductive material is further included, the negative electrode active material layer may include 90 wt% to 98 wt% of the negative electrode active material, 1 wt% to 5 wt% of the binder, and 1 wt% to 5 wt% of the conductive material.

The binder serves to well adhere the negative electrode active material particles to each other and also to adhere the negative electrode active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li. The amount of the thickener used may be 0.1 parts by weight to 3 parts by weight based on 100 parts by weight of the negative electrode active material.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanotube, and the like; a metal-based material of a metal powder or a metal fiber including copper, nickel, aluminum silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof.

### Rechargeable Lithium Battery

Another embodiment provides a rechargeable lithium battery including a positive electrode, a negative electrode, a separator between the positive electrode and the positive electrode, and an electrolyte.

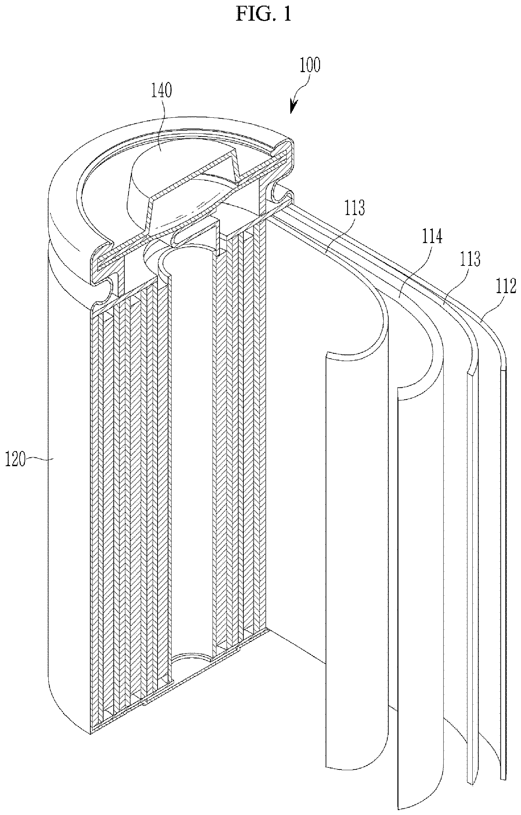

FIG. 1 is a schematic view illustrating a rechargeable lithium battery according to an embodiment. Referring to FIG. 1, a rechargeable lithium battery 100 according to an embodiment of the present invention includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, negative electrode 112, and separator 113, a battery case 120 housing the battery cell, and a sealing member 140 sealing the battery case 120.

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture, and when used in a mixture, the mixing ratio may be appropriately adjusted in accordance with a desired battery performance, which is widely understood by those skilled in the art.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

The aromatic hydrocarbon-based solvent may be an aromatic hydrocarbon-based compound represented by Chemical Formula I.

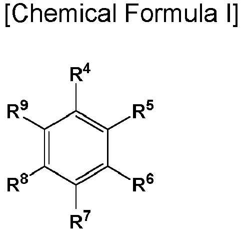

In Chemical Formula I, R⁴ to R⁹ are the same or different and are selected from hydrogen, a halogen, a C1 to C10 alkyl group, a haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound represented by Chemical Formula II in order to improve cycle-life of a battery.

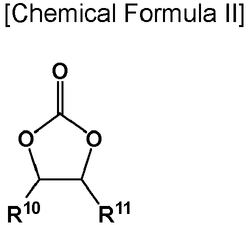

In Chemical Formula II, R¹⁰ and R¹¹ are the same or different and selected from hydrogen, a halogen, a cyano group, a nitro group, and fluorinated C1 to C5 alkyl group, provided that at least one of R¹⁰ and R¹¹ is a halogen, a cyano group, a nitro group, and fluorinated C1 to C5 alkyl group, and R¹⁰ and R¹¹ are not simultaneously hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-organic solvent supplies lithium ions in a battery, enables a basic operation of a rechargeable lithium battery, and improves transportation of the lithium ions between positive and negative electrodes.

Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide); LiFSI), LiC₄F₉SO₃, LiClO₄, LiAlO₂, LiAlCl₄, LiPO₂F₂, LiN(CₓF₂ₓ₊₁SO₂)(C_{y}F2_{y+1}SO₂), wherein x and y are natural numbers, for example, an integer ranging from 1 to 20, lithium difluoro(bisoxolato) phosphate, LiCl, Lil, LiB(C₂O₄)₂ (lithium bis(oxalato) borate; LiBOB), and lithium difluoro(oxalato)borate (LiDFOB).

The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

The separator 113 that is also called a separating layer separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, separator may be selected from a glass fiber, polyester, Teflon, polyethylene, polypropylene, polytetrafluoroethylene, or a combination thereof. It may have a form of a nonwoven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multi-layered structure.

Rechargeable lithium batteries may be classified as lithium ion batteries, lithium ion polymer batteries, and lithium polymer batteries according to the presence of a separator and the kind of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods of these batteries are well known in the art, and thus detailed descriptions thereof will be omitted.

### DETAILED DESCRIPTION OF THE EMBODIMENTS

Hereinafter, examples of the present invention and comparative examples are described. It is to be understood, however, that the examples are for the purpose of illustration and are not to be construed as limiting the present invention.

### Example 1

### (1) Manufacture of Positive Electrode

85.5 wt% lithium iron phosphate with a particle diameter of about 1 µm as a first active material, 2 wt% of melamine cyanurate, 5 wt% of carbon nanotube as a conductive material, and 7.5 wt% of polyvinylidene fluoride as a binder are dispersed in a solvent of N-methyl-2-pyrrolidone, preparing first active material layer slurry. The slurry is coated and dried on an aluminum current collector, forming a first active material layer with a thickness of about 5 µm.

97.7 wt% of Li_{1.0}Ni_{0.88}Co_{0.1}Al_{0.01}Mg_{0.01}0₂ as a second active material, 1.0 wt% of acetylene black as a conductive material, and 1.3 wt% of polyvinylidene fluoride as a binder are dispersed in a solvent of N-methyl-2-pyrrolidone, preparing second active material slurry. This slurry is coated and dried on the surface of the first active material layer to form a second active material layer with a thickness of 50 µm. The coated product is roll-pressed to have mixture density of 3.65 g/cc, manufacturing a positive electrode.

### (2) Manufacture of Negative Electrode

97 wt% of artificial graphite, 1 wt% of carboxylmethyl cellulose, and 2 wt% of styrene-butadiene rubber are mixed in a solvent of water, preparing negative electrode active material slurry. This slurry is coated and dried on the copper current collector and roll-pressed, manufacturing a negative electrode having mixture density of 1.65 g/cc.

### (3) Manufacture of Rechargeable Lithium Battery Cell

An electrode stack structure is obtained by interposing a polyethylene porous separator between the negative and positive electrodes, injecting an electrolyte thereinto, and sealing them under a reduced pressure, manufacturing a rechargeable lithium battery cell. The electrolyte is prepared by dissolving 1 M LiPF₆ and 1 wt% of vinylene carbonate in a solvent of ethylene carbonate and dimethyl carbonate mixed in a volume ratio of 3:7.

### Example 2

A positive electrode, a negative electrode, and a rechargeable lithium battery cell are manufactured in the same method as in Example 1 except that the first active material layer slurry of the positive electrode is prepared by using 75.5 wt% of lithium iron phosphate, 12 wt% of melamine cyanurate, 5 wt% of carbon nanotube, and 7.5 wt% of polyvinylidene fluoride.

### Comparative Example 1

A positive electrode, a negative electrode, and a rechargeable lithium battery cell are manufactured in the same method as in Example 1 except that the positive electrode is manufactured by not forming the first active material layer but directly coating the second active material slurry on the aluminum current collector only to include the current collector and the second active material layer.

### Comparative Example 2

A positive electrode, a negative electrode, and a rechargeable lithium battery cell are manufactured in the same method as in Example 1 except that the positive electrode is manufactured by using 87.5 wt% of lithium iron phosphate, 5 wt% of carbon nanotube, and 7.5 wt% of polyvinylidene fluoride to prepare the first active material layer slurry.

### Comparative Example 3

A positive electrode, a negative electrode, and a rechargeable lithium battery cell are manufactured in the same method as in Comparative Example 1 except that the positive electrode is manufactured by adding 2 wt% of melamine cyanurate (based on 100 parts by weight of the second active material layer) to the second active material layer.

### Evaluation Example 1: Safety Evaluation

### 1. Penetration Safety Evaluation

The rechargeable battery cells according to Examples 1 to 2 and Comparative Examples 1 to 3 are charged to a maximum voltage to conduct a penetration test with a pin with a thickness of 2.5 mmΦ at a penetration speed of 5 mm/s, and the results are shown in Table 1.

### <Evaluation Criteria>

L0: no effect on appearance
L1: leakage, external temperature < 150 °C
L2: external temperature < 200 °C
L3: fumes, external temperature > 200 °C
L4: flame
L5 : explosion

### 2. Dropping Safety Evaluation

The rechargeable battery cells according to Examples 1 to 2 and Comparative Examples 1 to 3 are 18 times dropped from a height of 1.8 m to a concrete floor at 20 °C ±5 °C. After placing the battery cells to receive an impact at several places, the impact is three times applied thereto respectively from the upper/lower/upper right/lower right/upper right/lower left angles, and the results are shown in Table 1.

### 3. Crash Safety Evaluation

The rechargeable battery cells according to Examples 1 to 2 and Comparative Examples 1 to 3 are charged to a maximum voltage at 0.5 C under a cut-off condition at 0.05 C and then, evaluated with respect to crash safety after 24 hours' aging as follows.
· Place the full cell on a steel plate (thickness ≥ 5 cm).
· Place a round bar in the center of the sample (Round bar: ϕ15 mm). At this time, the round bar should be placed in the vertical direction with the electrode. In the case of a cylindrical battery, place the round bar in a seesaw shape.
· The cylindrical weight weighing 9 kg is freely dropped from a height of 610 mm to the round bar to observe the results, and the results are shown in Table 1.

**(Table 1)**

| | Positive electrode structure | | | Penetra tion | Drop ping | Cras h |
|---|---|---|---|---|---|---|
| | First positive electrode active material | | Second positive electrode active material | | | |
| | Present or absent | Melamine cyanurate | Melamine cyanurate | | | |
| Example 1 | ○ | 2% | 0% | L1 | L0 | L1 |
| Example 2 | ○ | 12% | 0% | L1 | L0 | L1 |
| Comparative Example 1 | X | 0% | 0% | L4 | L3 | L4 |
| Comparative Example 2 | ○ | 0% | 0% | L2 | L2 | L4 |
| Comparative Example 3 | X | 0% | 2% | L3 | L2 | L4 |

In Table 1, Comparative Examples 1 and 3 including no first positive electrode active material exhibit dropping safety of L2 or higher, penetration safety of L3 or higher, and crash safety of L4 or higher, resultantly showing very weak safety, and particularly, Comparative Example 3 to which a melamine-based compound is applied exhibits relatively one level superior safety to the cell of Comparative Example 1 using no melamine-based compound. Comparative Example 2 using the first positive electrode active material without applying the melamine-based compound exhibits penetration safety of L2 or higher, dropping safety of L2 or higher, and crash safety of L4 or higher, which also results in weak safety.

On the other hand, the cells of Examples 1 and 2 in which the melamine compound is applied to the first positive electrode active material all exhibit excellent safety results in terms of penetration, dropping, and crash.

### Evaluation Example 2: Evaluation of DC-IR Resistance

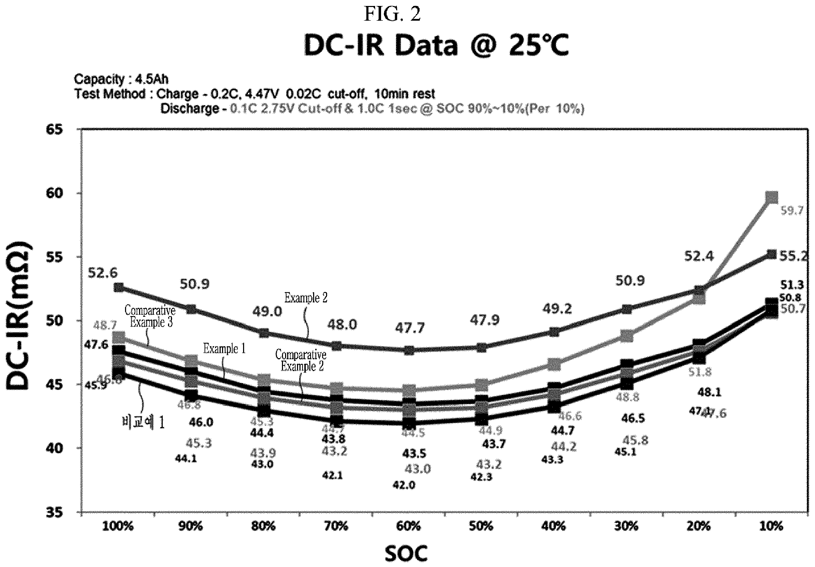

The rechargeable battery cells according to Examples 1 to 2 and Comparative Examples 1 to 3 are evaluated with respect to DC-IR resistance, and the results are shown in FIG. 2. Referring to FIG. 2, the cells of Comparative Example 3 and Example 2 exhibit insufficient resistance characteristics.

### Evaluation Example 3: Evaluation of Room-temperature Cycle-life

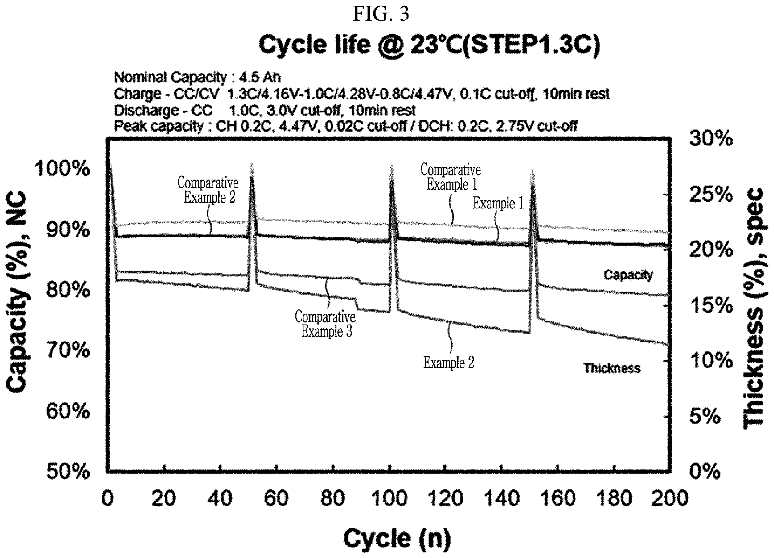

The rechargeable battery cells of Examples 1 to 2 and Comparative Examples 1 to 3 are charged to a maximum voltage at 1.3 C under a cut-off condition at 0.1 C and then, evaluated with respect to cycle-life at 1.0 C under a cut-off condition at 3.0 V at 23 °C, and the results are shown in FIG. 3. Referring to FIG. 3, Comparative Example1 exhibits a general battery cycle-life result, but Example 1 and Comparative Example 2 exhibit equivalent cycle-life results. Herein, Comparative Example 3, in which melamine cyanurate is added entirely to the second active material layer and more included than Example 1 based on an absolute amount of the added melamine cyanurate, exhibits inferior cycle-life retention, but Example 2, in which the melamine cyanurate is more added intensively to the first active material layer than Example 1, exhibits inferior cycle-life retention due to resistance increase.

Referring to Table 1 and FIGS. 2 to 3, the rechargeable battery cells according to the examples simultaneously include the first positive electrode active material including the melamine-based compound and the second positive electrode active material as each layer and thereby, exhibit improved safety without deteriorating performance.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

### [Description of Symbols]

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A positive electrode for a rechargeable lithium battery, comprising
a current collector;
a first active material layer disposed on the current collector and including a first active material and a melamine-based compound; and
a second active material layer disposed on the first active material layer and including a second active material,
wherein the first active material and the second active material are different from each other,
the first active material includes at least one of the compounds represented by Chemical Formula 1 to Chemical Formula 4:
[Chemical Formula 1] Liₐ₁M¹ₓ₁Fe₍₁₋ₓ₁₎PO₄
wherein, in Chemical Formula 1, 0.90≤a1≤1.5, 0≤x1≤0.7, and M¹ is Mg, Co, Ni, or a combination thereof,
[Chemical Formula 2] Liₐ₂Mnₓ₂Fe₍₁₋ₓ₂₎PO₄
wherein, in Chemical Formula 2, 0.90≤a2≤1.5 and 0.1≤x2≤0.9,
[Chemical Formula 3] Liₐ₃Mn₍₂₋ₓ₃₎M³ₓ₃O₄
wherein, in Chemical Formula 3, 0.90≤a3≤1.5, 0≤x3≤0.4, and M³ is Al, Cr, Mg, La, Ce, Sr, V, or a combination thereof,
[Chemical Formula 4] Liₐ₄Mn₍₁₋ₓ₄₎M⁴ₓ₄PO₄
wherein, in Chemical Formula 4, 0.90≤a4≤1.5, 0≤x4≤0.5, and M⁴ is Al, Cr, Mg, La, Ce, Sr, V, or a combination thereof.

2. The positive electrode for the rechargeable lithium battery of claim 1, wherein
the melamine-based compound is included in an amount of 0.2 wt% to 15 wt% based on 100% by weight of the first active material layer.

3. The positive electrode for the rechargeable lithium battery of claim 1, wherein
the melamine-based compound is melamine, a melamine derivative, or a combination thereof,
the melamine derivative includes a melamine organic acid salt, a melamine inorganic acid salt, or a combination thereof.

4. The positive electrode for the rechargeable lithium battery of claim 1, wherein
an average particle diameter of the first active material is 10 nm to 2 µm.

5. The positive electrode for the rechargeable lithium battery of claim 1, wherein
the first active material is included in an amount of 70 wt% to 99.8 wt%, based on 100 wt% of the first active material layer.

6. The positive electrode for the rechargeable lithium battery of claim 1, wherein
the first active material layer further includes a conductive material.

7. The positive electrode for the rechargeable lithium battery of claim 6, wherein
the conductive material includes natural graphite, artificial graphite, carbon black, acetylene black, denka black, ketjen black, a carbon nanotube, an L-carbon nanotube, a carbon fiber, or a combination thereof.

8. The positive electrode for the rechargeable lithium battery of claim 6, wherein
the conductive material is included in an amount of 0.1 wt% to 5 wt% based on 100 wt% of the first active material layer.

9. The positive electrode for the rechargeable lithium battery of claim 1, wherein
the first active material layer further includes a binder.

10. The positive electrode for the rechargeable lithium battery of claim 9, wherein
the binder includes polyvinylchloride, carboxylated polyvinylchloride, polyvinylfluoride, polyvinylidene fluoride, polyethylene oxide, polyvinylpyrrolidone, polyurethane, polytetrafluoroethylene, a styrene butadiene rubber, an acrylated styrene butadiene rubber, an acrylonitrile butadiene rubber, carboxylmethyl cellulose, hydroxypropyl cellulose, diacetyl cellulose, polyimide, polyamideimide, or a combination thereof.

11. The positive electrode for the rechargeable lithium battery of claim 9, wherein
the binder is included in an amount of 0.1 wt% to 5 wt% based on 100 wt% of the first active material layer.

12. The positive electrode for the rechargeable lithium battery of claim 1, wherein
a thickness of the first active material layer is 2 µm to 10 µm.

13. The positive electrode for the rechargeable lithium battery of claim 1, wherein
a thickness of the second active material layer is 11 µm to 100 µm.

14. The positive electrode for the rechargeable lithium battery of claim 1, wherein
the second active material includes a compound represented by Chemical Formula 11:
[Chemical Formula 11] Liₐ₁₁M¹¹_{1-y11-z11}M¹²_{y11}M¹³_{z11}O₂
wherein, in Chemical Formula 11, 0.9≤a11≤1.8, 0≤y11<1, 0≤z11<1, 0≤y11+z11<1, and M¹¹, M¹², and M¹³ are each independently Ni, Co, Mn, Al, Mg, Ti or a combination thereof.

15. The positive electrode for the rechargeable lithium battery of claim 1, wherein
an average particle diameter of the first active material is 3 µm to 30 µm.

16. A rechargeable lithium battery, comprising
the positive electrode for the rechargeable lithium battery of any one of claim 1 to claim 15,
a negative electrode and
an electrolyte.
